# EUROPEAN PATENT SPECIFICATION

(11) **EP 1 029 887 B1**
(45) Date of publication and mention of the grant of the patent: **02.11.2006**
(21) Application number: 98940638.4
(22) Date of filing: 31.08.1998
(51) Int. Cl.: C08J 9/10, C08L 15/00

(54) **FOAMING RUBBER COMPOSITION AND RUBBER FOAM**
SCHÄUMENDE KAUTSCHUKZUSAMMENSETZUNG UND KAUTSCHUKSCHAUM
COMPOSITION DE CAOUTCHOUC DE MOUSSAGE ET MOUSSE DE CAOUTCHOUC

(30) Priority: 29.08.1997 JP 24752997
(43) Date of publication of application: 23.08.2000
(73) Proprietor: ZEON CORPORATION, Tokyo 100-0005 (JP)
(72) Inventor: AIMURA, Yoshiaki, Nippon Zeon Co., Ltd, Kawasaki-shi, Kanagawa 210-0863 (JP); ASAI, Manabu, Nippon Zeon Co., Ltd, Kawasaki-shi, Kanagawa 210-0863 (JP)
(74) Representative: Vossius & Partner
(86) International application number: PCT/JP1998/003880
(87) International publication number: WO 1999/011696

(56) References cited:
- EP-A- 0 704 480
- JP-A- 6 107 740
- JP-A- 63 308 045
- PATENT ABSTRACTS OF JAPAN vol. 013, no. 151 (C-584), 12 April 1989 (1989-04-12) & JP 63 308045 A (TOKAI RUBBER IND LTD), 15 December 1988 (1988-12-15)
- PATENT ABSTRACTS OF JAPAN vol. 018, no. 385 (C-1227), 20 July 1994 (1994-07-20) & JP 06 107740 A (NIPPON ZEON CO LTD), 19 April 1994 (1994-04-19)

## Description

This invention relates to a rubber foam. More particularly, it describes a foaming rubber composition having an excellent stability against variation of a vulcanization time and giving a rubber foam having a stabilized quality.

Rubber foams have heretofore been used in various fields. Rubber foams are produced from natural rubber or synthetic rubbers such as polyisoprene rubber, acrylonitrile-butadiene copolymer rubber (NBR), styrene-butadiene copolymer rubber (SBR) and ethylene-vinyl acetate copolymer (EVA).

The applicant has reported in Japanese Unexamined Patent Publication No. H6-10774 the use of a foamed rubber article made from a rubber composition comprising hydrogenated NBR having incorporated therein a zinc salt of an ethylenically unsaturated carboxylic acid, a metal salt of a higher fatty acid, a foaming agent and an organic peroxide compound, which foam has high strengths.

The latest research has shown that the reported rubber composition is subject to scorching, i.e., premature curing or burning. It also has shown that properties, such as specific gravity and tensile strength, of a vulcanized product thereof greatly varies depending upon variation of vulcanization conditions such as vulcanization temperature and time. In the recent technical progress, a rubber composition giving a rubber foam, which does not have these problems and has excellent heat resistance and abrasion resistance, is eagerly desired.

EP-A-0 704 480 relates to a rubber composition comprising (i) a nitrile group-containing highly saturated copolymer rubber, which is a product obtained by hydrogenating the conjugated diene portion of an unsaturated nitrile-conjugated diene copolymer, and (ii) an ethylene-α-olefin-non-conjugated diene copolymer rubber. The highly saturated copolymer rubber has an alkylthio group having 12 to 16 carbon atoms, which include at least three tertiary carbon atoms, and has a sulfur atom which is directly bound to at least one of the tertiary carbon atoms; and the highly saturated copolymer rubber further has a Mooney viscosity of 15 to 200 and an iodine value not larger than 80.

An object of the present invention is to provide a rubber foam having stabilized mechanical properties, the extent of foaming and the mechanical properties varying only to a negligible extent depending upon the vulcanization conditions such as vulcanization temperature and time. The production of the rubber foam can easily be controlled, and the rubber foam has excellent heat resistance and abrasion resistance. Furthermore, the present specification describes a foaming rubber composition which is not subject to scorching in the step of preparing the rubber composition, and which exhibits a stabilized foamability.

Another object of the present invention is to provide a rubber foam having excellent heat resistance and abrasion resistance and stabilized quality.

The present inventors have conducted extensive research to attain the above-mentioned objects, and found that, the problems of the conventional art arise due to the fact that hydrogenated NBR is vulcanized with an organic peroxide, and further found that, when hydrogenated NBR is vulcanized with sulfur, good foamability can be obtained and the properties of the resulting foamy rubber article vary only to a minimum extent depending upon the vulcanization conditions such as vulcanization temperature and time. The present invention has been completed on the basis of these findings.

Thus, in one aspect of the present invention, there is provided a rubber foam having a hardness of 20 to 90 as measured by a type E durometer and an expansion ratio of 100% to 1,000%, which is obtainable by vulcanizing and foaming a foaming rubber composition comprising a nitrile group-containing highly saturated copolymer rubber having incorporated therein 0.05 to 10 parts by weight of a sulfur-containing vulcanizer and 1 to 30 parts by weight of a foaming agent, based on 100 parts by weight of the nitrile group-containing highly saturated copolymer rubber.

The nitrile group-containing highly saturated copolymer rubber used in the present invention is a hydrogenated product obtained by hydrogenating conjugated diene units of a copolymer of at least one unsaturated nitrile monomer and at least one conjugated diene monomer.

The unsaturated nitrile monomer includes, for example, acrylonitrile and methacrylonitrile. Of these, acrylonitrile is preferable. The conjugated diene monomer includes, for example, 1,3-butadiene, 2-methyl-1,3-butadiene and 1,3-pentadiene. Of these, 1,3-butadiene is preferable. If desired, other ethylenically unsaturated monomers may be copolymerized with the unsaturated nitrile monomer and the conjugated diene monomer. As specific examples of the nitrile group-containing highly saturated copolymer rubber, there can be mentioned a hydrogenated product of acrylonitrile-butadiene copolymer rubber and a hydrogenated product of acrylonitrile-butadiene-ethylenically unsaturated monomer copolymer rubber. The procedure of hydrogenation is not particularly limited, and include those in which hydrogenation is conducted in the presence of a catalyst such as palladium/silica; a palladium complex described, for example, in Japanese Unexamined Patent Publication (hereinafter abbreviated to "JP-A") H3-252405; and rhodium compounds and ruthenium compounds, described in JP-A S62-125858, JP-A S62-429374 and JP-A H1-45405.

The nitrile group-containing highly saturated copolymer rubber, obtained by hydrogenation, usually has an iodine value of 1 to 120, preferably 1 to 60. In view of the heat resistance and strength required for the foamy rubber article, a nitrile group-containing highly saturated copolymer rubber having an appropriate iodine value should be chosen.

The nitrile group-containing highly saturated copolymer rubber used in the present invention may includes, as mentioned above, a hydrogenated product of a copolymer obtained by copolymerizing an unsaturated nitrile monomer and a conjugated diene monomer, and other ethylenically unsaturated monomer copolymerizable therewith. As specific examples of the copolymerizable ethylenically unsaturated monomer, there can be mentioned unsaturated carboxylic acids such as acrylic acid, methacrylic acid, maleic acid, fumaric acid and itaconic acid; alkyl esters of these unsaturated carboxylic acids such as methyl acrylate, methyl methacrylate, ethyl acrylate, ethyl methacrylate, butyl acrylate, butyl methacrylate, 2-ethylhexyl acrylate, 2-ethylhexyl methacrylate, lauryl acrylate, lauryl methacrylate, dimethyl maleate, diethyl fumarate, di-n-butyl fumarate and di-n-butyl itaconate; alkoxyalkyl esters of these unsaturated carboxylic acids such as methoxyethyl acrylate, ethoxyethyl acrylate and methoxyethoxyethyl acrylate; hydroxyalkyl acrylates and hydroxyalkyl methacrylates, such as 2-hydroxyethyl acrylate, 2-hydroxyethyl methacrylate, hydroxypropyl acrylate and hydroxypropyl methacrylate; glycidyl acrylate and glycidyl methacrylate; acrylamide, methacrylamide and derivatives thereof such as N-methylolacrylamide, N-methylolmethacrylamide, N-butoxymethylacrylamide and N-butoxymethylmethacrylamide; cyanoalkyl acrylates such as α- and β-cyanoethyl acrylate, α-, β- and γ-cyanopropyl acrylate and cyanobutyl acrylate; amino group-containing esters of acrylic acid such as dimethylaminomethyl acrylate and diethylaminomethyl acrylate; and fluoroalkyl acrylates such as trifluoroethyl acrylate, pentafluoropropyl acrylate and dodecafluoroheptyl acrylate. These ethylenically unsaturated monomers may be used either alone or as a combination of at least two thereof. The amount of the ethylenically unsaturated monomers is usually not larger than 60% by weight, preferably not larger than 50% by weight, based on the weight of the copolymer.

In combination with the above-listed ethylenically unsaturated monomers, other copolymerizable monomers may be used provided that the object of the invention can be achieved. Such copolymerizable monomers include vinyl monomers such as styrene and vinylpyridine, and non-conjugated diene monomers such as vinylnorbornene, dicyclopentadiene and 1,4-hexadiene.

The content of unsaturated nitrile monomer units in the nitrile group-containing highly saturated copolymer rubber is usually in the range of 10 to 60% by weight, preferably 20 to 50% by weight. In view of the oil resistance required for a rubber foam, a copolymer having an appropriate content of unsaturated nitrile monomer units should preferably be chosen. The Mooney viscosity (ML₁₊₄, 100°C) of the copolymer is usually in the range of 20 to 150, preferably 60 to 90.

The foaming rubber composition of the present invention is prepared by incorporating the above-mentioned nitrile group-containing highly saturated copolymer rubber as a raw rubber material with a sulfur-containing vulcanizer and a foaming agent as the essential ingredients.

As specific examples of the sulfur-containing vulcanizer incorporated in the foaming rubber composition, there can be mentioned sulfur, and sulfur-donating compounds such as morpholine disulfide, alkylphenol disulfide, tetramethylthiuram disulfide and tetrabenzylthiuram disulfide. Usually a vulcanization accelerator, and an accelerator activator such as zinc oxide or stearic acid are used in combination with the sulfur-containing vulcanizer. The vulcanization accelerator used is not particularly limited, and conventional vulcanization accelerators can be used, which include, for example, thiazole compounds such as 2-mercaptobenzothiazole, dibenzothiazyl disulfide and a zinc salt of 2-mercaptobenzothiazole, thiuram compounds such as tetramethylthiuram disulfide, and dithiocarbamate compounds such as zinc dimethyldithiocarbamate and zinc diethyldithiocarbamate.

The kinds and amounts of the sulfur-containing vulcanizer, the vulcanization accelerator and the accelerator activator are not particularly limited, and optimum kinds and amounts can be determined by preliminary experiments so that scorching occurring at the step of preparing the rubber composition, vulcanization conditions employed at the step of preparing a rubber foam and properties required for the rubber article are satisfied. Usually, based on 100 parts by weight of the nitrile group-containing highly saturated copolymer rubber, the amount of the sulfur-containing vulcanizer is in the range of 0.05 to 10 parts by weight, preferably 0.1 to 5 parts by weight, the amount of the vulcanization accelerator is in the range of 0.05 to 15 parts by weight, preferably 0.1 to 15 parts by weight, and the amount of the accelerator activator is in the range of 0.05 to 30 parts by weight, preferably 0.1 to 20 parts by weight.

The foaming agent used in the present invention is not particularly limited and conventional foaming agents for foamy rubbers may be used. As specific examples of the foaming agent, there can be mentioned azo compounds such as azodicarbonamide and azobisisobutyronitrile; sulfonylhydrazide compounds such as benzenesufonylhydrazide, p-toluenesulfonylhydrazide and 4,4-oxybis(benzenesulfonylhydrazide); and amine compounds such as N,N'-dinitrosopentamethylenetetramine. Of these, azodicarbonamide is most preferable.

These foaming agents are used usually in an amount of 1 to 30 parts by weight, preferably 3 to 20 parts by weight, based on 100 parts by weight of the nitrile group-containing highly saturated copolymer rubber. When the amount is smaller than 1 part by weight, the extent of foaming is low. In contrast, when the amount is larger than 30 parts by weight, cells in the rubber foam become non-uniform and too large, and mechanical strength and abrasion resistance of the rubber foam are reduced.

If desired, other conventional ingredients used in the rubber industry can be incorporated in the foaming rubber composition of the present invention, in combination with the above-mentioned nitrile group-containing copolymer rubber, the sulfur-containing vulcanizer and the foaming agent. Such ingredients include, for example, a reinforcer such as carbon black or silica, a filler such as calcium carbonate or clay, a processing aid, a plasticizer, an antioxidant, an antiozonant and a colorant. The foaming rubber composition can be prepared by kneading the above-stated essential ingredients by a conventional kneader such as a roll or a closed type kneader, for example, a Banbury mixer.

The rubber foam of the present invention can be produced by vulcanizing the above-stated foaming rubber composition. The vulcanization of the foaming rubber composition is usually carried out in a one stage or two stages. When the two-stage procedure is employed, it is preferable that the first stage is conduced at a temperature of about 140 to 180°C for 2 to 20 minutes, and the second stage is conducted at a temperature about 10°C higher than the temperature employed in the first stage. The extent of foaming is usually in the range of 100 to 1,000%, preferably 200 to 500%, as an expansion ratio. The rubber foam usually has a hardness of 20 to 90, preferably 30 to 60, as measured by a type E durometer.

The present invention will now be described specifically by the following examples and comparative examples. Parts are by weight unless otherwise specified.

### Examples 1-6, Comparative Examples 1-6

Foaming rubber compositions were prepared from a hydrogenated acrylonitrile-butadiene copolymer rubber (tradename "ZETPOL 2020" supplied by Nippon Zeon Co.; acrylonitrile content: 36% by weight, iodine value: 28, Mooney viscosity [ML₁₊₄, 100°C]: 78) according to the recipe shown in Table 1 and Table 2 by using an open roll. The foaming rubber compositions were vulcanized under vulcanization conditions shown in Table 1 and Table 2 to give rubber foams.

The scorch time (t₃₅ [minutes]) of each foaming rubber composition was measured according to JIS K6300. The expansion ratio, mechanical properties and abrasion resistance of each rubber foam were determined by the following methods. The results are shown in Table 1 and Table 2.

### (1) Expansion Ratio of Rubber Foam

The expansion ratio (%) is an expansion percentage in volume obtained by dividing the specific gravity of an unvulcanized foaming rubber composition by the specific gravity of a foamy rubber article. The larger the expansion ratio, the larger the volume expansion due to the foaming.

### (2) Mechanical Properties of Rubber Foam

The mechanical properties of a rubber foam, i.e., tensile strength (unit: MPa), elongation (unit: %) and 100% tensile modulus (unit: MPa) are determined on a dumbbell specimen according to JIS K6251 at a drawing speed of 500 mm/min. The dumbbell specimen is prepared by punching a foamy rubber sheet with a thickness of 2.5 mm by using a JIS #3 dumbbell die.

### (3) Hardness of Rubber Foam

The hardness (unit: point) is measured according to JIS K6253 by using a type E durometer for determination of low-hardness. The smaller the hardness value, the softer the rubber foam.

### (4) Abrasion Resistance of Rubber Foam

The abrasion resistance is evaluated by measuring an abrasion loss measured according to JIS K6264 by using an Akron abrasion tester at room temperature under a load of 6 pounds. The abrasion resistance is expressed in terms of abrasion resistance index as the abrasion resistance of the rubber foam obtained in Example 1 is 100. The larger the abrasion resistance index, the better the abrasion resistance.

**Table 1**

| Example No. | 1 | 2 | 3 | 4 | 5 | 6 |
|---|---|---|---|---|---|---|
| Recipe | | | | | | |
| Hydrogenated NBR | 100 | 100 | 100 | 100 | 100 | 100 |
| Sulfur | 1.5 | 1.5 | 1.5 | 1.5 | 1.5 | 1.5 |
| Stearic acid | 1.0 | 1.0 | 1.0 | 1.0 | 1.0 | 1.0 |
| Zinc oxide #1 | 5.0 | 5.0 | 5.0 | 5.0 | 5.0 | 5.0 |
| FEF carbon black *1 | 40 | 40 | 40 | 40 | 40 | 40 |
| Azodicarbonamide | 10 | 10 | 10 | - | - | - |
| Benzenesulfonylhydrazide | - | - | - | 10 | 10 | 10 |
| Antioxidant *2 | 1.5 | 1.5 | 1.5 | 1.5 | 1.5 | 1.5 |
| Plasticizer *3 | 15 | 15 | 15 | 15 | 15 | 15 |
| Accelerator *4 | 1.0 | 1.0 | 1.0 | - | - | - |
| Accelerator *5 | - | - | - | 1.0 | 1.0 | 1.0 |

| Processing conditions | | | | | | |
|---|---|---|---|---|---|---|
| Mooney scorch time t₃₅ | | | | | | |
| (min, 125°C) | 16.2 | 16.2 | 16.2 | 13.2 | 13.2 | 13.2 |
| Primary vulcanization | | | | | | |
| (160°C, min) | 9 | 10 | 11 | 9 | 10 | 11 |
| Secondary vulcanization | | | | | | |
| (150°C, min) | 30 | 30 | 30 | 30 | 30 | 30 |
| Specific gravity of rubber foam (g/cc) | 0.35 | 0.34 | 0.32 | 0.45 | 0.45 | 0.44 |
| Expansion ratio (%) | 330 | 325 | 320 | 280 | 280 | 280 |

| Properties of vulcanized rubber foam | | | | | | |
|---|---|---|---|---|---|---|
| Tensile strength (MPa) | 6.3 | 6.4 | 6.4 | 7.4 | 7.5 | 7.4 |
| Elongation (%) | 440 | 430 | 430 | 340 | 340 | 340 |
| 100% Tensile modulus | | | | | | |
| (MPa) | 2.1 | 2.3 | 2.3 | 3.4 | 3.5 | 3.5 |
| Hardness (E durometer) | | | | | | |
| (point) | 48 | 48 | 48 | 56 | 57 | 56 |
| Abrasion resistance | 100 | 102 | 103 | 102 | 103 | 103 |

**Table 2**

| Comparative Example No. | 1 | 2 | 3 | 4 | 5 | 6 |
|---|---|---|---|---|---|---|
| Recipe | | | | | | |
| Hydrogenated NBR | 100 | 100 | 100 | 100 | 100 | 100 |
| Zinc dimethacrylate | - | - | - | 45 | 45 | 45 |
| Magnesium stearate | - | - | - | 10 | 10 | 10 |
| FEF carbon black *1 | 40 | 40 | 40 | 40 | 40 | 40 |
| Azodicarbonamide | 10 | 10 | 10 | - | - | - |
| Benzenesulfonylhydrazide | - | - | - | 10 | 10 | 10 |
| Antioxidant *2 | 1.5 | 1.5 | 1.5 | 1.5 | 1.5 | 1.5 |
| Plasticizer *3 | 15 | 15 | 15 | - | - | - |
| Organic peroxide *6 | 5 | 5 | 5 | 5 | 5 | 5 |

| Processing conditions | | | | | | |
|---|---|---|---|---|---|---|
| Mooney scorch time t₃₅ | | | | | | |
| (min, 125°C) | >30 | >30 | >30 | 7.4 | 7.4 | 7.4 |
| Primary vulcanization | | | | | | |
| (160°C, min) | 9 | 10 | 11 | 9 | 10 | 11 |
| Secondary vulcanization | | | | | | |
| (150°C, min) | 30 | 30 | 30 | 30 | 30 | 30 |
| Specific gravity of | | | | | | |
| rubber foam (g/cc) | 0.28 | 0.36 | 0.45 | 0.21 | 0.28 | 0.38 |
| Expansion ratio (%) | 400 | 300 | 270 | 440 | 410 | 340 |

| Properties of vulcanized rubber foam | | | | | | |
|---|---|---|---|---|---|---|
| Tensile strength (MPa) | 5.2 | 6.4 | 7.8 | 9.2 | 9.5 | 9.9 |
| Elongation (%) | 520 | 480 | 390 | 300 | 280 | 260 |
| 100% Tensile modulus | | | | | | |
| (MPa) | 1.8 | 2.4 | 2.9 | 3.7 | 4.0 | 4.3 |
| Hardness (E durometer) | | | | | | |
| (point) | 41 | 45 | 51 | 44 | 46 | 48 |
| Abrasion resistance | 96 | 99 | 103 | 110 | 115 | 120 |

| | | | | | | |
|---|---|---|---|---|---|---|
| Note *1 Asahi #60 supplied by Asahi Carbon K.K. *2 Naugard 445 (substituted diphenylamine) supplied by Uniroyal Co. *3 ADK Cizer C-8 (tri-(2-ethylhexyl)trimertate) supplied by Asahi Denka Co. *4 Nocceler DM (dibenzothiazyl disulfide) supplied by Oouchi Shinko K.K. *5 Peroximon F-40 (1,3-bis-(t-butylperoxyisopropyl)benzene) supplied by Nippon Oil and Fat Co. | | | | | | |

The vulcanized state of a rubber foam varies depending upon the vulcanization time in the primary vulcanization. The factual data in Table 1 and Table 2 show the following. That is, in the foaming rubber composition of the present invention, the specific gravity of rubber foam and the expansion ratio do not vary even when the vulcanization time is varied (9, 10 and 11 minutes). The mechanical properties and the abrasion resistance also do not vary depending upon the vulcanization time. This means that the foaming rubber composition of the present invention gives a rubber foam having a stabilized quality.

In contrast, in a foaming rubber composition (Comparative Examples 1-3) containing an organic peroxide instead of sulfur as a vulcanizer, the specific gravity of rubber foam and the expansion ratio greatly vary even when the vulcanization time is varied to a minor extent. This means that a rubber foam having a stabilized quality is difficult to produce from the organic peroxide-containing rubber composition. In a conventional foaming rubber composition (Comparative Examples 4-6) comprising hydrogenated NBR having incorporated therein zinc dimethacrylate, the scorch time is short and burning occurs when the rubber composition is prepared, and the specific gravity of rubber foam and the expansion ratio thereof vary (although the extent of variation is minor as compared with that in Comparative Examples 1-3) when the vulcanization time in the primary vulcanization is varied. Thus, a rubber foam having a stabilized quality is difficult to produce.

The forming rubber composition of the present invention, which comprises a nitrile group-containing highly saturated copolymer rubber having incorporated therein a sulfur-containing vulcanizer gives a rubber foam having a stabilized quality, i.e., an expansion ratio and mechanical properties, which vary only to a negligible extent depending upon the vulcanization time. The production of the rubber foam can be easily controlled.

The foaming rubber composition of the present invention is useful for various rubber foams, which include soles of sport shoes, heels of working shoes, industrial rolls and sealing materials, industrial heat insulating materials, and cushioning materials.

## Claims

1. A rubber foam having a hardness of 20 to 90 as measured by a type E durometer and an expansion ratio of 100% to 1,000%, which is obtainable by vulcanizing and foaming a foaming rubber composition comprising a nitrile group-containing highly saturated copolymer rubber having incorporated therein 0.05 to 10 parts by weight of a sulfur-containing vulcanizer and 1 to 30 parts by weight of a foaming agent, based on 100 parts by weight of the nitrile group-containing highly saturated copolymer rubber

2. A rubber foam according to claim 1, wherein the nitrile group-containing highly saturated copolymer rubber is a hydrogenated product of an unsaturated nitrile-conjugated diene copolymer comprising 10 to 60% by weight of unsaturated nitrile monomer units, or a hydrogenated product of an unsaturated nitrile-conjugated diene-ethylenically unsaturated monomer copolymer comprising 10 to 60% by weight of unsaturated nitrile monomer units and not larger than 60% by weight of ethylenically unsaturated monomer units; said nitrile group-containing highly saturated copolymer rubber has an iodine value of 1 to 120.

3. A rubber foam according to claim 2, wherein the nitrile group-containing highly saturated copolymer rubber contains 20 to 50% by weight of unsaturated nitrile monomer units and has an iodine value of 1 to 60.

4. A rubber foam according to any of claims 1 to 3, wherein the foaming agent is selected from azo compounds, sulfonylhydrazide compounds and amine compounds.

5. A rubber foam according to any of claims 1 to 4, which further contains, based on 100 parts by weight of the nitrile group-containing highly saturated copolymer rubber, 0.05 to 15 parts by weight of a vulcanization accelerator and 0.05 to 30 parts by weight of an accelerator activator.

## Patentansprüche

1. Kautschukschaum mit einer Härte von 20 bis 90, gemessen mit einem Durometer vom Typ E, und einem Expansionsverhältnis von 100% bis 1000%, erhältlich durch Vulkanisation und Schäumen einer schäumenden Kautschukzusammensetzung, die einen Nitrilgruppen enthaltenden hochgesättigten Copolymerkautschuk mit darin enthaltenen 0,05 bis 10 Gewichtsteilen eines schwefelhaltigen Vulkanisators und 1 bis 30 Gewichtsteilen eines Schaumbildners, bezogen auf 100 Gewichtsteile des Nitrilgruppen enthaltenden hochgesättigten Copolymerkautschuks, umfasst.

2. Kautschukschaum nach Anspruch 1, wobei der Nitrilgruppen enthaltende hochgesättigte Copolymerkautschuk ein hydriertes Produkt eines ungesättigten Nitril-konjugierten Dien-Copolymers, das 10 bis 60 Gew.-% ungesättigte Nitril-Monomereinheiten umfasst, oder ein hydriertes Produkt eines ungesättigten Nitril-konjugierten Dien-ethylenisch ungesättigten Monomer-Copolymers ist, das 10 bis 60 Gew.-% ungesättigte Nitril-Monomereinheiten und nicht mehr als 60 Gew.-% ethylenisch ungesättigte Monomereinheiten umfasst; wobei der Nitrilgruppen enthaltende hochgesättigte Copolymerkautschuk eine Iodzahl von 1 bis 120 aufweist.

3. Kautschukschaum nach Anspruch 2, wobei der Nitrilgruppen enthaltende hochgesättigte Copolymerkautschuk 20 bis 50 Gew.-% ungesättigte Nitril-Monomereinheiten enthält und eine Iodzahl von 1 bis 60 aufweist.

4. Kautschukschaum nach einem der Ansprüche 1 bis 3, wobei der Schaumbildner aus Azoverbindungen, Sulfonylhydrazid-Verbindungen und Aminverbindungen ausgewählt ist.

5. Kautschukschaum nach einem der Ansprüche 1 bis 4, welcher weiter bezogen auf 100 Gewichtsteile des Nitrilgruppen enthaltenden hochgesättigten Copolymerkautschuks 0,05 bis 15 Gewichtsteile eines Vulkanisationsbeschleunigers und 0,05 bis 30 Gewichtsteile eines Beschleunigeraktivators enthält.

## Revendications

1. Mousse de caoutchouc de dureté comprise entre 20 et 90 mesurée par un duromètre de type E et un coefficient d'expansion compris entre 100 % et 1000 %, que l'on peut obtenir par vulcanisation et par effet moussant d'une composition de caoutchouc en mousse comprenant un caoutchouc copolymère hautement saturé contenant un groupe nitrile où l'on incorpore de 0,05 à 10 parties en poids d'agent de vulcanisation contenant du soufre et de 1 à 30 parties en poids d'un agent moussant, pour 100 parties en poids de caoutchouc copolymère hautement saturé contenant un groupe nitrile.

2. Mousse de caoutchouc selon la revendication 1, dans laquelle le caoutchouc copolymère hautement saturé contenant un groupe nitrile est un produit hydrogéné d'un copolymère de nitrile insaturé et de diène conjugué comprenant de 10 à 60 % en poids de motifs monomères de nitrile insaturé, ou un produit hydrogéné d'un copolymère de nitrile insaturé, de diène conjugué et de monomère à insaturation éthylénique comprenant de 10 à 60 pour cent de motifs monomères de nitrile insaturé et au plus 60 % en poids de motifs monomères à insaturation éthylénique ; le indice d'iode dudit caoutchouc copolymère hautement saturé contenant un groupe nitrile valant entre 1 et 120.

3. Mousse de caoutchouc selon la revendication 2, dans laquelle le caoutchouc copolymère hautement saturé contenant un groupe nitrile contient de 20 à 50% en poids de motifs monomères nitrile insaturé, et dont le indice d'iode est compris entre 1 et 60.

4. Mousse de caoutchouc selon l'une quelconque des revendications 1 à 3, dans laquelle on choisit l'agent moussant parmi des composés azo, des composés sulfonylhydrazide et des composés amine.

5. Mousse de caoutchouc selon l'une quelconque des revendications 1 à 4, qui contient en outre, pour 100 parties en poids du caoutchouc copolymère hautement saturé contenant un groupe nitrile, 0,05 à 15 parties en poids d'un accélérateur de vulcanisation et de 0,05 à 30 parties en poids d'un activateur accélérateur.
